**Europäisches Patentamt**

**European Patent Office**

**Office européen des brevets**

(19)

(11) Numéro de publication: **0 122 191**
**B1**

(12) # FASCICULE DE BREVET EUROPEEN

(45) Date de publication du fascicule du brevet:
**27.01.88**

(51) Int. Cl.⁴: **G 21 C 3/32**

(21) Numéro de dépôt: **84400654.4**

(22) Date de dépôt: **02.04.84**

(54) **Procédé de fabrication d'un assemblage de réacteur nucléaire et assemblage obtenu par ce procédé.**

(30) Priorité: **08.04.83 FR 8305790**

(43) Date de publication de la demande:
**17.10.84 Bulletin 84/42**

(45) Mention de la délivrance du brevet:
**27.01.88 Bulletin 88/4**

(84) Etats contractants désignés:
**BE DE GB IT NL**

(56) Documents cités:
**DE - A - 2 046 272**
**FR - A - 2 081 770**
**FR - A - 2 134 104**
**FR - A - 2 195 823**

(73) Titulaire: **COMMISSARIAT A L'ENERGIE ATOMIQUE,**
**31/33, rue de la Fédération, F-75015 Paris (FR)**

(72) Inventeur: **Brunon, Jean-Marc, Blvd. de la Cible**
**Résidence Arc de Meyran-Bât.1, F-13100 Aix en**
**Provence (FR)**

(74) Mandataire: **Mongrédien, André et al, c/o**
**BREVATOME 25, rue de Ponthieu, F-75008 Paris (FR)**

**Description**

La présente invention se rapporte à un nouveau procédé de fabrication d'un assemblage pour un réacteur nucléaire ainsi qu'à un assemblage obtenu par un tel procédé.

Les assemblages combustibles ou fertiles utilisés dans les réacteurs nucléaires à neutrons rapides se composent essentiellement de trois parties. Ainsi, chaque assemblage comprend en partant du haut une protection neutronique supérieure, une partie intermédiaire (fissile ou fertile) et un pied.

De façon plus précise, le pied de l'assemblage comprend un tube cylindrique soudé par son extrémité supérieure à une pièce d'appui annulaire massive et par son extrémité inférieure à un bouchon comportant une serrure. La pièce d'appui annulaire présente une portée sphérique par laquelle l'assemblage repose sur un sommier servant par ailleurs à alimenter l'assemblage en sodium liquide. A cet effet, le tube présente des ouvertures et la pièce d'appui est traversée par un passage axial. La partie intermédiaire comprend quant à elle un faisceau d'aiguilles combustibles ou fertiles fixées à leur extrémité inférieure sur une grille d'accrochage et logées dans un tube de section polygonale (généralement hexagonale). Enfin, la protection neutronique supérieure est constituée par une pièce massive percée en son centre d'un passage par lequel le sodium liquide réchauffé sort de l'assemblage.

Actuellement, la liaison entre les trois parties de l'assemblage est réalisée par soudage des extrémités du tube hexagonal sur la protection neutronique supérieure et sur la pièce d'appui du pied de l'assemblage. Dans une réalisation illustrée par le document FR-A-2 195 823, le pied d'assemblage est fixé sur le tube polygonal par soudage bout à bout.

Compte tenu de cette dernière caractéristique, l'une au moins des soudures reliant le tube hexagonal aux pièces massives que sont la protection neutronique supérieure et la pièce d'appui du pied de l'assemblage doit être réalisée après la mise en place du faisceau d'aiguilles dans le tube. Actuellement, la mise en place du faisceau intervient même avant la réalisation de ces deux soudures.

Ce procédé de fabrication n'est pas satisfaisant, notamment pour les raisons suivantes.

La réalisation des soudures en présence du faisceau d'aiguilles combustibles doit se faire derrière une protection neutronique. En conséquence, les opérations de soudage, de contrôle et de réparation éventuelle doivent être effectuées à distance, ce qui implique des manutentions de l'assemblage longues et coûteuses.

Compte tenu des impératifs de sûreté, toute soudure présentant une fissure, même très petite (par exemple de longueur supérieure à 0,2 mm) est considérée comme mauvaise. Or, la présence du faisceau d'aiguilles combustibles à l'intérieur du tube hexagonal complique sérieusement le contrôle des soudures. En effet, les techniques les plus précises de contrôle direct non destructif ne peuvent pas être utilisées dans ces conditions et les autres techniques, telles que le contrôle par ultrasons, ne permettent pas de détecter des fissures aussi petites.

Pour cette raison, on a recours actuellement à une méthode de contrôle qui consiste à prélever des éprouvettes sur des tubes échantillonnés pendant la fabrication des assemblages, puis à effectuer les contrôles appropriés sur ces éprouvettes. Un tel contrôle sur éprouvettes est donc fait en temps différé et le résultat du contrôle n'est disponible qu'après la réalisation d'une ou deux séries de soudures (chaque série comprenant par exemple vingt soudures). En conséquence, lorsqu'une éprouvette douteuse est détectée, on se trouve devant l'obligation de rebuter, ou tout au moins de considérer comme douteux, un grand nombre d'assemblages terminés. De ce fait, cette méthode se caractérise par un coût très élevé et elle peut conduire à immobiliser une quantité importante de matière fissile.

L'inconvénient qui vient d'être mentionné n'est pas seulement théorique, car la géométrie différente des pièces à souder (tube hexagonal relativement mince, pièces massives épaisses) conduit à réaliser un cordon de soudure dissymétrique et entraîne des dilatations différentielles et, en conséquence, des contraintes thermiques qui engendrent l'une et l'autre un risque non négligeable de fissuration lors du soudage.

La présente invention a précisément pour objet un procédé de fabrication d'un assemblage ne présentant pas les inconvénients des procédés existants. En particulier, la présente invention a pour objet un procédé selon lequel toutes les soudures sont réalisées avant la mise en place du faisceau d'aiguilles combustibles ou fertiles afin de pouvoir contrôler directement, et éventuellement réparer, les soudures avant l'introduction du faisceau d'aiguilles. L'invention a également pour objet un assemblage obtenu par un tel procédé.

Dans ce but et conformément à l'invention, il est proposé un procédé de fabrication d'un assemblage comprenant un tube de section polygonale, un faisceau d'aiguilles logé dans ce tube, une pièce de protection neutronique supérieure fixée à l'extrémité supérieure du tube et un pied d'assemblage creux fixé à l'extrémité inférieure du tube, par soudage bout à bout, caractérisé en ce qu'il comprend les étapes successives suivantes:

  — contrôle de la soudure ainsi réalisée;

  — introduction du faisceau d'aiguilles dans le tube polygonal disposé verticalement;

  — fixation du tube polygonal sur la pièce de protection neutronique supérieure, par emboutissage du tube dans des chambrages formés dans ladite pièce.

Dans le cas où le pied d'assemblage comporte un système déprimogène démontable et un bouchon démontable obturant normalement l'extrémité inférieure du pied, et selon un mode de réalisation préféré de l'invention, le système déprimogène et le bouchon ne sont pas en place lors du soudage du pied sur le tube polygonal. L'introduction du faisceau d'aiguilles dans le tube est alors réalisée en supportant le faisceau d'aiguilles au moyen d'un vérin glissant à l'intérieur du pied d'assemblage creux, avant le montage du système déprimogène et du bouchon.

Selon une variante de mise en œuvre du procédé selon l'invention, le système déprimogène est relié au bouchon au moyen d'une tige et monté en même temps que le bouchon.

Selon une autre variante de mise en œuvre du procédé selon l'invention, le pied d'assemblage comportant une pièce d'appui fixée au tube polygonal, un tube de pied fixé à cette pièce d'appui, le système déprimogène et le bouchon démontable, ce dernier est vissé dans un filetage formé dans le tube de pied.

Afin de réduire autant que possible les risques de fissuration de la soudure par laquelle le tube polygonal est fixé au pied d'assemblage, le tube est, de préférence, emboîté à force sur une lame d'appui du pied d'assemblage, avant d'être fixé bout à bout à ce dernier par soudage. L'emboîtement à force du tube sur la lame d'appui peut alors être réalisé soit en chauffant le tube, soit à froid, par des moyens mécaniques.

L'invention concerne également un assemblage pour réacteur nucléaire, comprenant un tube de section polygonale, un faisceau d'aiguilles logé dans ce tube, une pièce de protection neutronique supérieure fixée à l'extrémité supérieure du tube et un pied d'assemblage creux fixé à l'extrémité inférieure du tube, le pied d'assemblage comprenant une lame d'appui sur laquelle le tube polygonal est emboîté à force et soudé bout à bout, caractérisé en ce que la pièce de protection neutronique supérieure comporte des chambrages dans lesquels le tube est embouti, de façon à laisser un léger jeu entre le tube et ladite pièce.

On décrira maintenant, à titre d'exemple non limitatif, un mode de réalisation particulier de l'invention en se référant aux dessins annexés dans lesquels:

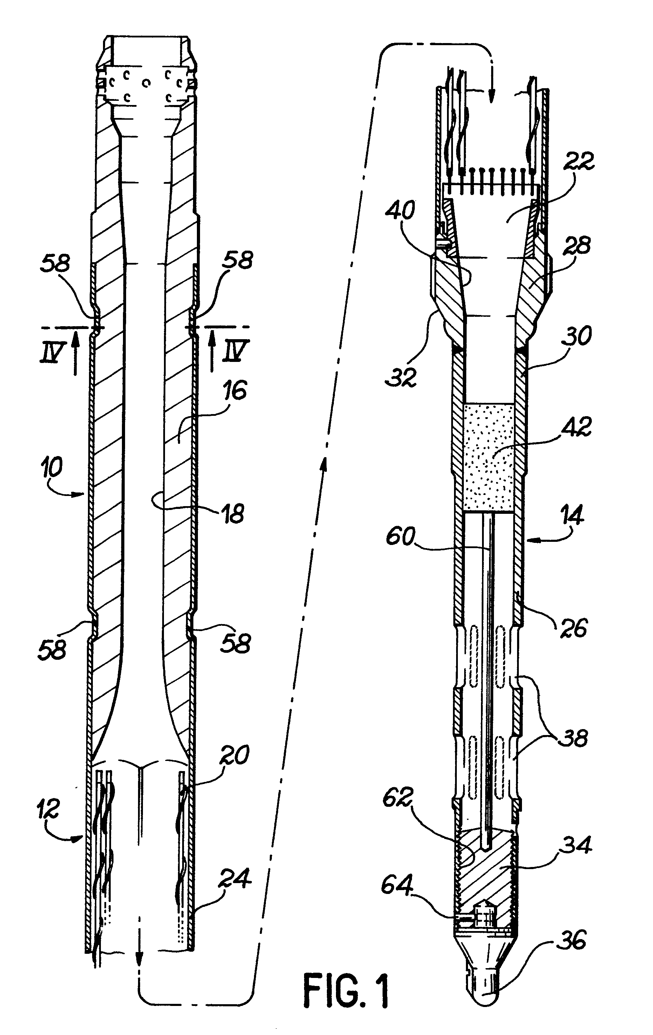

– les parties gauche et droite de la figure 1 sont des vues en coupe longitudinale qui représentent respectivement les parties haute et basse d'un assemblage combustible obtenu conformément au procédé selon l'invention,

– les figures 2a à 2e illustrent de façon schématique les principales étapes du procédé de fabrication selon l'invention de l'assemblage de la figure 1,

– la figure 3 est une vue en coupe qui représente à plus grande échelle la zone de l'assemblage au niveau de laquelle le tube hexagonal entourant le faisceau d'aiguilles combustibles est soudé à la pièce d'appui du pied d'assemblage, et

– la figure 4 est une section transversale de l'assemblage selon la ligne IV–IV de la figure 1.

On a représenté sur la figure 1 un assemblage combustible destiné à être utilisé dans un réacteur nucléaire à neutrons rapides. Cet assemblage se compose principalement, en partant du haut, d'une protection neutronique supérieure 10, d'une partie fissile 12 et d'un pied 14.

La protection neutronique supérieure 10 est constituée par un bloc d'acier annulaire 16 percé suivant l'axe vertical de l'assemblage d'un passage 18 par lequel le sodium réchauffé par son passage dans la partie fissile 12 sort de l'assemblage.

La partie fissile 12 comprend quant à elle un faisceau d'aiguilles combustibles 20 fixées par leur extrémité inférieure sur une grille d'accrochage 22 de structure connue. Ce faisceau est logé dans un tube hexagonal 24.

Enfin, le pied 14 de l'assemblage comprend un tube cylindrique 26, de diamètre réduit par rapport à la section du tube hexagonal 24. Une pièce d'appui annulaire massive 28 est fixée par une soudure 30 à l'extrémité supérieure du tube 26. Cette pièce 28 est munie sur sa face externe d'une portée sphérique 32 par laquelle l'assemblage repose sur le sommier d'alimentation (non représenté) assurant son supportage. La partie inférieure du tube 26 est obturée par un bouchon 34 muni à son extrémité inférieure d'une serrure 36 servant de détrompeur. La serrure 36 permet d'éviter que l'assemblage soit placé dans le cœur du réacteur à un endroit non approprié.

On sait que l'alimentation des assemblages en sodium liquide s'effectue par le sommier dans lequel sont reçus les pieds 14 des assemblages. A cet effet, le tube 26 présente des orifices 38 par lesquels le sodium pénètre à l'intérieur de l'assemblage, et la pièce d'appui 28 présente un passage axial 40 permettant au sodium de remonter jusqu'au faisceau d'aiguilles combustibles 20.

Le débit de sodium liquide à l'intérieur de l'assemblage est contrôlé au moyen d'un système déprimogène 42 logé dans le tube 26, au-dessus des orifices 38. Le système déprimogène 42 peut notamment être constitué par un empilement de plaques perforées, par un empilement de billes ou par tout autre dispositif connu permettant de contrôler à volonté le débit du sodium lors de sa traversée du faisceau d'aiguilles combustibles 20.

Conformément à l'invention, le raccordement des trois parties 10, 12 et 14 de l'assemblage est réalisé de façon originale et selon un procédé qui va maintenant être décrit en se référant aux figures 2a à 2e.

Dans un premier temps, on réalise la soudure 30 entre l'extrémité supérieure du tube de pied 26 et la pièce d'appui annulaire 28. Cette soudure peut être contrôlée immédiatement et réparée si nécessaire. Pour un raison qui apparaîtra par la suite, la mise en place des autres éléments constituant le pied 14 (bouchon 34 et système déprimogène 42) est différée à un stade ultérieur de la fabrication.

Comme l'illustre de façon très schématique la figure 2a, on réalise immédiatement ensuite la soudure 44 (traits discontinus sur la figure 2a) entre la pièce d'appui 28 du pied 14 et le tube hexagonal 24.

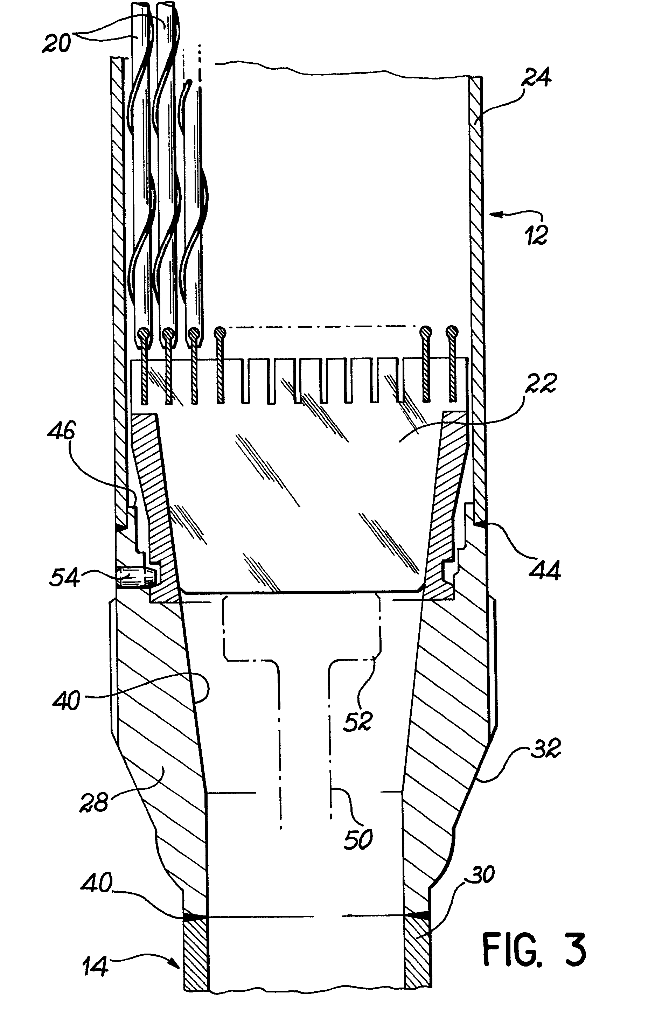

De façon plus précise et comme on l'a représenté plus en détail sur la figure 3, l'extrémité inférieure du tube hexagonal 24 est tout d'abord emboîté à force sur une lame d'appui 46 formée à l'extrémité supérieure de la pièce d'appui 28 et dont le profil externe est identique au profil interne du tube hexagonal 24. De préférence, cette opération est réalisée sans usinage du tube. En effet, on a observé que, si le tube hexagonal présente généralement certaines déformations après son passage dans la filière, les cotes nominales de ce tube sont cependant respectées, de sorte qu'un usinage préalable du tube, qui serait difficile et coûteux, n'est pas nécessaire.

L'emboîtement forcé du tube hexagonal 24 sur la lame d'appui 46 de la pièce 28 est destiné, d'une part, à assurer le centrage du tube sur cette pièce et, d'autre part, à éviter l'effondrement de la soudure 44 lors de sa réalisation.

Afin de réaliser cet emboîtement forcé, on peut envisager deux méthodes. Tout d'abord, cet emboîtement peut être réalisé à froid, par exemple au moyen d'un vérin ou d'une presse. L'emboîtement forcé du tube hexagonal sur la lame d'appui 46 peut aussi être réalisé en chauffant le tube hexagonal à une température comprise par exemple entre 300 °C et 400 °C.

Il est à noter que la soudure 44 ainsi réalisée entre le tube hexagonal 24 et la pièce d'appui 28 constitue pratiquement une soudure bout à bout de ces deux pièces, de sorte que les risques de fissuration de cette soudure s'en trouvent très réduits.

Immédiatement après la réalisation de la soudure 44, celle-ci peut être contrôlée directement par tout moyen de contrôle non destructif présentant la précision voulue. En effet, ce contrôle est effectué en l'absence du faisceau d'aiguilles combustibles, ce qui permet notamment de mettre en place un capteur, une source ou un film à l'intérieur de l'assemblage. Ces contrôles peuvent donc être réalisés de façon immédiate, ce qui permet de réduire sensiblement leur coût et de ne pas immobiliser inutilement de la matière fissile. De plus, la soudure comme le contrôle sont réalisés en atmosphère normale, ce qui implique une grande simplification des manutentions de l'assemblage.

Le cas échéant, une soudure défectueuse ou doûteuse peut être réparée immédiatement après son contrôle.

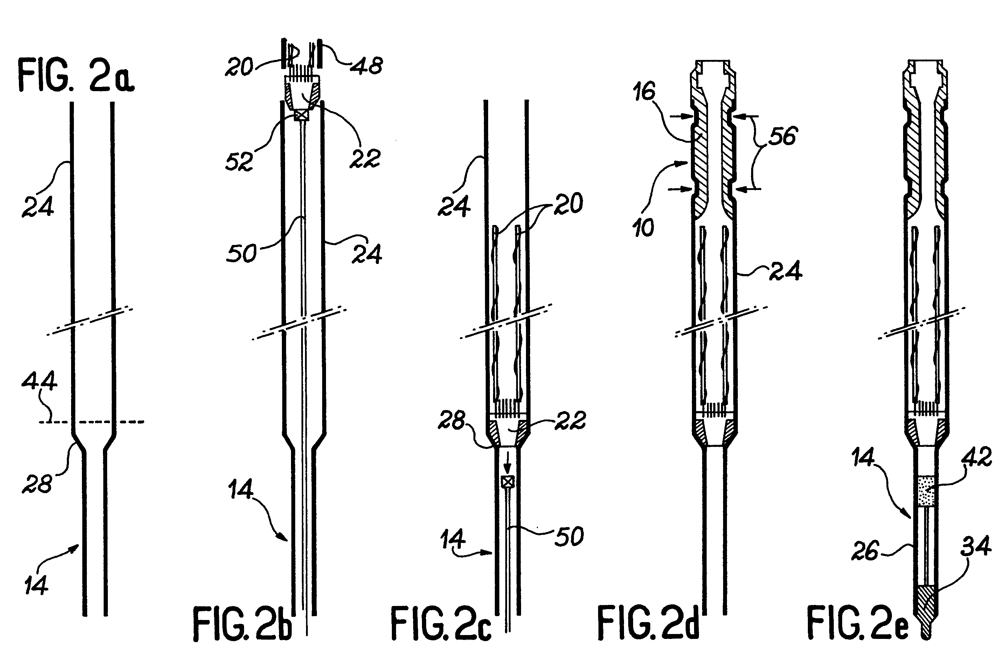

Lorsque la soudure du tube hexagonal sur le pied de l'assemblage, ainsi que le contrôle et la réparation éventuelle de cette soudure, sont terminés, le faisceau d'aiguilles combustibles 20 peut être introduit dans le tube hexagonal comme on l'a représenté schématiquement sur les figures 2b et 2c.

A cet effet, on voit sur la figure 2b que le tube hexagonal 24, soudé au pied 14 toujours dépourvu de son bouchon inférieur et de son système déprimogène, sont placés verticalement en-dessous du faisceau d'aiguilles combustibles 20, celui-ci étant également placé verticalement et maintenu dans un étui 48. Un vérin dont seule la tige 50, de préférence télescopique, est représentée, est introduit par le bas de l'assemblage au travers du pied 14 et du tube hexagonal 24, jusqu'à ce que la tête 52 du vérin vienne en contact avec la grille 22 sur laquelle sont accrochées les aiguilles combustibles 20.

Bien entendu, la tête 52 du vérin doit être conçue à la fois pour passer dans le tube de pied 26 présentant un diamètre interne réduit (environ 90 mm) et pour assurer un soutien efficace de la grille 22. Pour résoudre ce problème, il est possible soit de prendre appui directement sur les rails centraux de la grille 22, soit de munir la tête 52 de doigts escamotables.

Lorsque la tête 52 du vérin est en contact avec la grille 22, le faisceau d'aiguilles combustibles 20, soutenu par le vérin, est descendu progressivement dans le tube hexagonal 24. Bien entendu, cette opération est réalisée avec une surveillance constante de la descente du faisceau dans le tube. Cette surveillance peut consister en une mesure du poids apparent du faisceau, ce poids étant égal au poids réel du faisceau, diminué du frottement de celui-ci à l'intérieur du tube hexagonal et du frottement du vérin.

A la fin de cette opération et comme on l'a représenté schématiquement sur la figure 2c et sur la figure 3, la grille 22 vient prendre appui sur la pièce d'appui 28 du pied d'assemblage et la tige du vérin est dégagée en totalité du pied de l'assemblage.

Comme l'illustre la figure 3, le verrouillage de la grille 22 sur la pièce d'appui 28 peut être réalisé par tout moyen mécanique simple tel qu'une vis 54.

Conformément à une autre caractéristique importante de l'invention et comme l'illustre la figure 2d, la soudure servant habituellement à fixer le bloc 16 constituant la protection neutronique supérieure sur le tube hexagonal 24 est supprimée et remplacée par une opération d'emboutissage illustrée schématiquement par les flèches 56 sur la figure 2d.

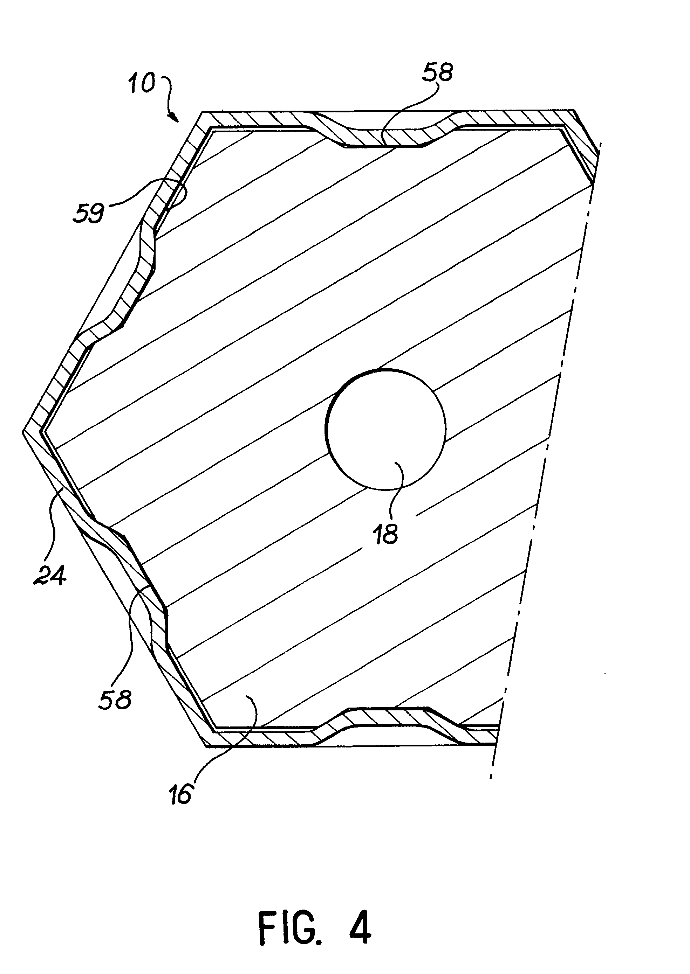

De façon plus précise, et comme on le verra mieux sur les figures 1 et 4, on réalise tout d'abord sur la surface externe hexagonale de la pièce massive 16 constituant la protection neutronique supérieure des chambrages 58. A titre d'exemple, on peut réaliser sur la pièce 16 deux séries de six chambrages 58, chaque chambrage d'une même série étant réalisé sur l'une des faces externes de la pièce 16. On notera que ces chambrages ne forment pas une gorge continue à la périphérie de la pièce 16, mais au contraire des évidements séparés les uns des autres.

Si l'on se réfère à nouveau à la figure 2d, le tube hexagonal 24 est disposé autour de la pièce massive 16 au moins au niveau des chambrages 58, puis embouti dans ces chambrages.

Ce mode de fixation selon l'invention permet d'éviter toute soudure sur l'assemblage après le montage du faisceau d'aiguilles combustibles, supprimant ainsi des opérations délicates et coûteuses.

De plus et comme l'illustre la figure 4, cette solution permet d'obtenir par construction un léger jeu 59 entre le tube hexagonal 24 et la pièce massive 16. Ce jeu peut être utile dans certains cas.

Ainsi, dans le cas où une erreur de manutention à l'intérieur du réacteur conduit à introduire le pied d'un assemblage dans le passage 18 formé dans la protection neutronique supérieure d'un autre assemblage déjà en place dans le cœur, ce dernier assemblage est bouché. Si aucun moyen n'était prévu pour tenir compte de ce risque, une telle erreur aurait pour effet d'empêcher l'évacuation de la puissance résiduelle et de provoquer un échauffement dangereux de l'assemblage. Afin d'éviter qu'un tel incident ne se produise, on réalise actuellement dans la protection neutronique supérieure des assemblages des évidements permettant d'assurer une circulation de sodium suffisante en cas de bouchage. Selon la présente invention, il n'est plus nécessaire de réaliser de tels évidements, puisque la liaison entre le tube hexagonal et la protection neutronique supérieure n'est pas étanche et autorise en elle-même une circulation de sodium qui peut être définie par construction de façon à être suffisante en cas de bouchage.

L'existence d'un jeu entre la protection neutronique supérieure et le tube hexagonal permet aussi de résoudre de manière très simple le problème qui se pose lorsqu'une rupture de gaine se produit pendant le transport de l'assemblage, après que celui-ci ait été irradié dans le cœur du réacteur. En effet, les assemblages étant transportés en oblique, une rupture de gaine a pour effet de libérer des gaz de fission qui s'accumulent au bas de la protection neutronique supérieure. Si l'on ne prévoyait aucune solution à ce problème, les gaz de fission empêcheraient le sodium de refroidir le haut des aiguilles combustibles pendant le transport, ce qui conduirait à d'autres ruptures de gaine. Actuellement, ce problème est résolu en réalisant des chambrages dans le haut des tubes hexagonaux et en perçant ces chambrages avant le transport des assemblages irradiés. On comprend que la fuite existant par construction entre le tube hexagonal et la protection neutronique supérieure selon l'invention évite de réaliser ces perçages.

La même remarque que ci-dessus s'applique bien entendu à tous les autres cas où un gaz tel que de l'argon risque d'être emprisonné dans les angles en bas de la protection neutronique supérieure et conduirait à un mauvais refroidissement de la partie correspondante de celle-ci, notamment de la soudure.

Lorsque la protection neutronique supérieure a été fixée au reste de l'assemblage par sertissage comme on vient de le décrire en se référant à la figure 2d, le système déprimogène 42 ainsi que le bouchon 34 du pied de l'assemblage peuvent être mis en place comme l'illustre la figure 2e.

Dans le mode de réalisation représenté, il est proposé d'introduire simultanément le système déprimogène 42 et le bouchon 34 en les reliant au moyen d'une tige 60 disposée selon l'axe vertical de l'assemblage. La fixation de l'ensemble ainsi réalisé peut notamment être effectuée par vissage du bouchon 34 dans un taraudage 62 formé sur l'extrémité inférieure du tube 26. Toujours selon le mode de réalisation représenté (figure 1) la serrure 36 est une pièce distincte du bouchon 34 et elle est donc mise en place après l'introduction de ce dernier. La serrure 36 peut notamment être fixée au bouchon 34 par tout moyen mécanique connu tel qu'une goupille 64.

On notera toutefois que ce mode de réalisation peut subir différentes variantes sans sortir du cadre de l'invention. Ainsi, le système déprimogène 42 et le bouchon 34 peuvent être constitués par deux pièces ne présentant aucune liaison entre elles. Le système déprimogène est alors mis en place dans un premier temps, après quoi le bouchon 34 est placé à l'extrémité inférieure du tube 26 et fixé à celui-ci par tout moyen mécanique convenable, c'est-à-dire aussi bien par vissage qu'à l'aide d'une goupille ou de tout autre moyen équivalent connu.

Parallèlement, le bouchon 34 et la serrure 36 pourraient aussi être réalisés en une seule pièce.

Dans le procédé de fabrication qui vient d'être décrit en se référant aux figures 2a à 2e, il est essentiel que l'introduction du faisceau d'aiguilles combustibles dans le tube hexagonal (figures 2b et 2c) s'effectue en position verticale. De préférence, la réalisation de la soudure 44 ainsi que le sertissage 56 (figures 2a et 2d) s'effectuent également en position verticale. Toutefois, cela n'est pas indispensable et on pourrait aussi envisager de réaliser ces opérations dans une autre position. Enfin, l'introduction du système déprimogène 42 et du bouchon 34 dans le tube de pied 26, telle que représentée sur la figure 2e, peut être réalisée dans n'importe quelle position.

Conformément à la mise en œuvre préférée du procédé selon l'invention qui vient d'être décrite, l'introduction du faisceau d'aiguilles combustibles dans le tube hexagonal est réalisée au moyen d'un vérin pénétrant par le pied de l'assemblage et pourvue du système déprimogène 42 et du bouchon 34.

Toutefois, dans une variante de réalisation non représentée appliquée à un faisceau d'aiguilles combustibles comportant par exemple à son extrémité supérieure une grille pourvue de moyens de préhension, le faisceau peut aussi être introduit à l'aide d'un grappin ou d'un système analogue disposé au-dessus du tube hexagonal. Dans ce cas, la mise en place dans le tube de pied 26 du système déprimogène 42 et du bouchon 34 peut être réalisée indifféremment avant ou après l'introduction du faisceau d'aiguilles combustibles dans le tube hexagonal.

Enfin, on comprendra que la description qui vient d'être faite à propos d'un assemblage combustible s'applique également à la fabrication d'un assemblage fissile, le faisceau d'aiguilles combustibles étant remplacé par un faisceau d'aiguilles fissiles.

**Revendications**

1. Procédé de fabrication d'un assemblage comprenant un tube (24) de section polygonale, un faisceau d'aiguilles (20) logé dans ce tube, une pièce de protection neutronique supérieure (16) fixée à l'extrémité supérieure du tube et un pied d'assemblage creux (14) fixé à l'extrémité inférieure du tube, par soudage bout à bout; caractérisé en ce qu'il comprend les étapes successives suivantes:

　－ contrôle de la soudure (44) ainsi réalisée;

　－ introduction du faisceau d'aiguilles (20) dans le tube polygonal (24) disposé verticalement;

　－ fixation du tube polygonal (24) sur la pièce de protection neutronique supérieure (16), par emboutissage (56) du tube dans des chambrages (58) formés dans ladite pièce.

2. Procédé de fabrication selon la revendication 1, le pied d'assemblage (14) comportant un système déprimogène démontable (42) et un bouchon démontable (34) obturant normalement l'extrémité inférieure du pied, caractérisé en ce que le système déprimogène et le bouchon ne sont pas en place lors du soudage du pied (14) sur le tube (24), l'introduction du faisceau d'aiguilles (20) dans le tube étant réalisée en supportant le faisceau d'aiguilles au moyen d'un vérin au travers du pied d'assemblage creux, avant le montage du système déprimogène (42) et du bouchon (34).

3. Procédé de fabrication selon la revendication 2, caractérisé en ce que le système déprimogène (42) est relié au bouchon (34) au moyen d'une tige (60) et monté en même temps que le bouchon.

4. Procédé de fabrication selon l'une quelconque des revendications 2 et 3, le pied d'assemblage (14) comportant une pièce d'appui (28) fixée au tube polygonal (24), un tube de pied (26) fixé à cette pièce d'appui, le système déprimogène (42) et ledit bouchon démontable (34), caractérisé en ce que le bouchon (34) est vissé dans un filetage (62) formé dans le tube de pied (26).

5. Procédé de fabrication selon l'une quelconque des revendications 1 à 4, caractérisé en ce que le tube polygonal (24) est emboîté à force sur une lame d'appui (46) du pied d'assemblage (14), avant d'être fixé bout à bout à ce dernier par soudage.

6. Procédé de fabrication selon la revendication 5, caractérisé en ce que l'emboîtement à force du tube (24) sur la lame d'appui (46) est réalisé à froid, par des moyens mécaniques.

7. Procédé de fabrication selon la revendication 5, caractérisé en ce que l'emboîtement à force du tube (24) sur la lame d'appui (46) est réalisé en chauffant ce tube.

8. Assemblage pour réacteur nucléaire, comprenant un tube (24) de section polygonale, un faisceau d'aiguilles (20) logé dans ce tube, une pièce de protection neutronique supérieure (16) fixée à l'extrémité supérieure du tube et un pied d'assemblage creux (14) fixé à l'extrémité inférieure du tube, le pied d'assemblage (14) comprenant une lame d'appui (46) sur laquelle le tube polygonal (24) est emboîté à force et soudé bout à bout, caractérisé en ce que la pièce de protection neutronique supérieure (16) comporte des chambrages (58) dans lesquels le tube (24) est embouti, de façon à laisser un léger jeu entre le tube et ladite pièce.

9. Assemblage selon la revendication 8, le pied d'assemblage comportant un bouchon démontable (34) et un système déprimogène (42), caractérisé en ce que le système déprimogène est relié au bouchon démontable par une tige (60).

10. Assemblage selon la revendication 8, le pied d'assemblage (14) comportant une pièce d'appui (28), fixée au tube polygonal (24), un tube de pied (26) fixé à cette pièce d'appui un système déprimogène (42) et un bouchon démontable (34), caractérisé en ce que le tube de pied (26) comporte un filetage (62) dans lequel est vissé le bouchon (34).

**Claims**

1. Process for the production of an assembly comprising a tube (24) of polygonal section, a bundle of needles (20) housed in said tube, a top neutron protector (16) fixed to the top end of the tube and a hollow assembly foot (14) fixed to the bottom end of the tube by butt welding, characterized in that it comprises the following successive stages:

　－ checking the resulting weld (44);

　－ introducing the bundle of needles (20) into the polygonal tube (24) disposed vertically;

　－ fixing the polygonal tube (24) on the top neutron protector (16) by stamping (56) the tube in recesses (58) formed in said protector.

2. Production process according to Claim 1, said assembly foot (14) comprising a detachable vacuum producer system (42) and a detachable stopper (34) normally closin the bottom end of the foot, characterized in that the vacuum producer system and the stopper are not in position during the welding of the foot (14) on the tube (24), the bundle of needles (20) being introduced into the tube while supporting said bundle by means of a jack through the hollow assembly foot, before the fitting of the vacuum producer system (42) and the stopper (34).

3. Production process according to Claim 2, characterized in that the vacuum producer system (42) is connected to the stopper (34) by means of a rod (60) and is mounted at the same time as the stopper.

4. Production process according to either of Claims 2 and 3, in which the assembly foot (14) comprises a support part (28) fixed to the polygonal tube (24) and a foot tube (26) fixed to said support part, the vacuum producer system (42) and said detachable stopper (34), characterized in that the stopper (34) is screwed into a screwthread (62) formed in the foot tube (26).

5. Production process according to any one of Claims 1 to 4, characterized in that the polygonal tube (24) is fitted by force over a support blade (46) on the assembly foot (14) before being fixed to the latter by butt welding.

6. Production process according to Claim 5, characterized in that the fitting of the tube (24) by force over the support blade (46) is effected in the cold state by mechanical means.

7. Production process according to Claim 5, characterized in that the fitting of the tube (24) by force over the support blade (46) is effected by heating said tube.

8. Assembly for a nuclear reactor, comprising a tube (24) of polygonal section, a bundle of needles (20) housed in said tube, a top neutron protector (16) fixed to the top end of the tube and a hollow assembly foot (14) fixed to the bottom end of the tube, the assembly foot (14) being provided with a support blade (46) over which the polygonal tube (24) is fitted by force and butt welded, characterized in that the top neutron protector (16) is provided with recesses (58) into which the tube (24) is stamped in such a manner as to leave a slight clearance between the tube and said protector.

9. Assembly according to Claim 8, in which the assembly foot is provided with a detachable stopper (34) and a vacuum producer system (42), characterized in that the vacuum producer system is connected to the detachable stopper by a rod (60).

10. Assembly according to Claim 8, in which the assembly foot (14) comprises a support part (28) fixed to the polygonal tube (24), a foot tube (26) fixed to said support part, a vacuum producer system (42), and a detachable stopper (34), characterized in that the foot tube (26) has a screwthread (62) into which the stopper (34) is screwed.

**Patentansprüche**

1. Verfahren zur Herstellung eines Elements, welches ein Rohr (24) mit polygonalem Querschnitt, ein in diesem Rohr untergebrachtes Nadelbündel (20), ein oberes Neutronenschutzteil (16), welches am oberen Ende des Rohrs befestigt ist, und einen hohlen Fuss (14) für das Element aufweist, der am unteren Ende des Rohrs mittels einer Schweissstossnaht befestigt ist, dadurch gekennzeichnet, dass das Verfahren die folgenden, aufeinanderfolgenden Schritte umfasst:
– Überprüfen der derart hergestellten Schweissnaht (44);
– Einführen des Nadelbündels (20) in das senkrecht angeordnete, polygonale Rohr (24);
– Befestigen des polygonalen Rohrs (24) an dem oberen Neutronenschutzteil (16) durch Eindrücken (56) des Rohrs in an dem Teil ausgebildete Vertiefungen (58).

2. Herstellungsverfahren nach Anspruch 1, wobei der Fuss (14) des Elements ein herausnehmbares Strömungsdrosselsystem (42) und einen herausnehmbaren Stopfen (34) umfasst, der normalerweise das untere Ende des Fusses verschliesst, dadurch gekennzeichnet, dass sich das Strömungsdrosselsystem und der Stopfen beim Schweissen des Fusses (14) an das Rohr (24) nicht an ihrem Platz befinden und dass das Einführen des Nadelbündels (20) in das Rohr durchgeführt wird, indem das Nadelbündel mittels eines Stützgliedes durch den hohlen Fuss des Elements hindurch vor dem Einbau des Strömungsdrosselsystems (42) und des Stopfens (34) abgestützt wird.

3. Herstellungsverfahren nach Anspruch 2, dadurch gekennzeichnet, dass das Strömungsdrosselsystem (42) durch eine Stange (60) mit dem Stopfen (34) verbunden ist und gleichzeitig mit dem Stopfen eingebaut wird.

4. Herstellungsverfahren nach Anspruch 2 oder 3, wobei der Fuss des Elements (14) ein an dem polygonalen Rohr (24) befestigtes Stützteil (28), ein an diesem Stützteil befestigtes Fussrohr (26), das Strömungsdrosselsystem (42) und den ausbaubaren Stopfen (34) umfasst, dadurch gekennzeichnet, dass der Stopfen (34) in ein in dem Fussrohr (26) ausgebildetes Gewinde (62) geschraubt ist.

5. Herstellungsverfahren nach einem der Ansprüche 1 bis 4, dadurch gekennzeichnet, dass das polygonale Rohr (24) auf einen dünnen Stützabschnitt (46) des Fusses (14) des Elements aufgepresst wird, bevor dieses an dem Fuss durch Stossschweissen befestigt wird.

6. Herstellungsverfahren nach Anspruch 5, dadurch gekennzeichnet, dass das Aufpressen des Rohrs (24) auf den dünnen Stützabschnitt (46) durch mechanische Mittel kalt durchgeführt wird.

7. Herstellungsverfahren nach Anspruch 5, dadurch gekennzeichnet, dass das Aufpressen des Rohrs (24) auf den dünnen Stützabschnitt (46) unter Erwärmung des Rohrs durchgeführt wird.

8. Brennstoffelement mit einem Rohr (24) mit polygonalem Querschnitt, einem in diesem Rohr untergebrachten Nadelbündel (20), einem oberen Neutronenschutzteil (16), welches an dem oberen Ende des Rohrs befestigt ist, und einem hohlen Fuss (14) für das Element, welcher an dem unteren Ende des Rohrs befestigt ist, wobei der Fuss (14) des Elements einen dünnen Stützabschnitt (46) aufweist, auf den das polygonale Rohr (24) aufgepresst ist und an den es stossgeschweisst ist, dadurch gekennzeichnet, dass das obere Neutronenschutzteil (16) Vertiefungen (58) aufweist, in die das Rohr (24) derart eingedrückt ist, dass ein geringes Spiel zwischen dem Rohr und dem Teil vorliegt.

9. Element nach Anspruch 8, wobei der Fuss des Elements einen herausnehmbaren Stopfen (34) und ein Strömungsdrosselsystem (42) aufweist, dadurch gekennzeichnet, dass das Strömungsdrosselsystem mittels einer Stange (16) mit dem herausnehmbaren Stopfen verbunden ist.

10. Element nach Anspruch 8, wobei der Fuss (14) des Elements ein an dem polygonalen Rohr (24) befestigtes Stützteil (28), ein Fussrohr (26), welches an diesem Stützteil befestigt ist, ein Strömungsdrosselsystem (42) und einen herausnehmbaren Stopfen (34) aufweist, dadurch gekennzeichnet, dass das Fussrohr (26) ein Gewinde (62) aufweist, in welches der Stopfen (34) geschraubt ist.

**FIG. 1**

FIG. 2a

FIG. 2b

FIG. 2c

FIG. 2d

FIG. 2e

FIG. 3

FIG. 4